# NEUE EUROPÄISCHE PATENTSCHRIFT

(11) **EP 0 425 923 B2**
(45) Veröffentlichungstag und Bekanntmachung des Hinweises auf die Entscheidung über den Einspruch: **14.01.1998**
(45) Hinweis auf die Patenterteilung: 12.05.1993
(21) Anmeldenummer: 90120067.5
(22) Anmeldetag: 19.10.1990
(51) Int. Cl.: B60R 19/03

(54) **Wiederaufarbeitbares Stossfängersystem**
Recyclable bumper system
Dispositif de pare-chocs recyclable

(30) Priorität: 31.10.1989 DE 3936194
(43) Veröffentlichungstag der Anmeldung: 08.05.1991
(73) Patentinhaber: BASF Aktiengesellschaft, 67063 Ludwigshafen (DE)
(72) Erfinder: Seiler, Erhard, Dr., W-6700 Ludwigshafen (DE); Ruempler, Klaus-Dieter, Dr., W-6706 Wachenheim (DE); Jung, Norbert, W-6840 Lampertheim (DE); Haardt, Udo, W-6843 Biblis (DE); Henning, Rainer, Dr., W-4400 Muenster (DE); Hambrecht, Juergen, Dr., W-4400 Muenster (DE)

(56) Entgegenhaltungen:
- EP-A- 97 504
- EP-A- 0 108 870
- EP-A- 0 174 483
- EP-A- 0 276 734
- GB-A- 2 178 703
- US-A- 4 749 613
- US-A- 4 762 352
- KUNSTSTOFFE, Bd. 79, Nr. 4, 1989, S. 339-343
- UMWELT, Bd. 6, 1986, S. 464-466
- SAE Technical Paper Series, Nr. 84022. P. Glance "Computer Aided Engineering Analysis of Automotive Bumpers"

## Beschreibung

Die Bestandteile von Stoßfängersystemen, nämlich Träger, Schaumkern und Hülle werden in steigendem Maß aus Kunststoff hergestellt, um Gewicht zu sparen und damit den Kraftstoffverbrauch zu senken. Für die genannten Bestandteile haben sich verschiedenartige Kunststoffe als geeignet erwiesen. In der Praxis wird als Material für den Stoßfängerträger vor allem glasfaserverstärktes Polyesterharz (SMC) eingesetzt, für den energieabsorbierenden Schaumkern ist geschäumtes Polyurethan (PUR-Schaum) bevorzugt, für die schlagfeste Kunststoffhülle werden Polycarbonat/Polybutylenterephthalat-Mischungen (PC/PBT), Polypropylen/Ethylen-Propylen-Kautschuk-Mischungen (PP/EPDM) und Polyurethan (PUR-RIM) verwendet.

Seit einiger Zeit wird dem Problem des stofflichen Recycling von großen Kunststoffteilen von Automobilen steigende Beachtung geschenkt, weil beim Shreddern von Altautos erhebliche Anteile vermischter und damit kaum nutzbringend wiederaufarbeitbarer Kunststoffabfälle übrig bleiben, die deponiert werden müssen, während der Metallschrott weitgehend recyclisiert werden kann.

Zahlreiche Versuche haben gezeigt, daß Kunststoffteile mit einheitlicher Rohstoffbasis prinzipiell stofflich recyclisierbar sind. Es ist jedoch sehr aufwendig und teuer, z. B. bei einem Stoßfängersystem aus PC/PBT-Hülle, PUR-Schaumkern und SMC-Träger eine Trennung der sich gegenseitig beim Recycling sehr störenden Komponenten vorzunehmen. Dazu kommt, daß auch nach erfolgter Trennung lackierte Stoßfängerhüllen, auch wenn sie kleingemahlen und über einen gut homogenisierenden Extruder aufgearbeitet werden, wegen der harten Lackreste zu einer drastischen Verringerung der mechanischen und optischen Eigenschaften des Recyclats führen.

In dem US-A- 4,749,613 ist ein Stoßfängerträger aus faserverstärkten Thermoplasten beschrieben, bei dem als Verstärkungsfasern Laminate aus unidirektional orientierten Endlosfasern und Wirrfasermatten eingesetzt werden. Bevorzugter Thermoplast ist Polypropylen. Dieser Stoßfängerträger kann mit Polyurethanschaum und einer Polyurethanhülle kombiniert werden.

In EP-A-97 504 wird geschäumtes Polypropylen einer Dichte von 15 - 45 g/l als Kernmaterial für Auto-Stoßstangen empfohlen. Als geeignetes Material für die Stoßfängerhülle werden Polyurethan, Polypropylen und Polyethylen genannt.

Die EP-A-174 483 empfiehlt als Kernmaterial geschäumtes Ethylen/Propylen-Copolymer mit einer Dichte von 47 - 180 g/l. Als Material für die Hülle werden Polyurethan oder ein Propylen-Copolymer genannt.

Aufgabe der Erfindung war es, ein Vollkunststoff-Stoßfängersystem zu entwickeln, das wiederaufarbeitbar ist und dabei - auch wenn es mit Lack versehen ist- Formkörper mit akzeptablen mechanischen Eigenschaften ergibt.

Diese Aufgabe wird durch das erfindungsgemäße Stoßfänger-System gelöst. Es besteht aus einem Stoßfängerträger A aus glasfaserverstärktem Polypropylen, einem energieabsorbierenden Schaumkern B aus geschäumtem Polypropylen und einer zähen, verformbaren Hülle C aus kautschukmodifiziertem Polypropylen, die gegebenenfalls lackiert sein kann. Das Stoßfängersystem kann leicht vom Altauto abmontiert werden und ist dann voll wiederaufarbeitbar, indem man es mechanisch zerkleinert, extrudiert und granuliert. Dabei hat sich gezeigt, daß die mechanischen Werte, die an spritzgegossenen Probekörpern gemessen werden, auch dann noch ausreichend hoch sind, wenn das Stoßfängersystem mit 0,05 bis 4 Gew.-% Lack überzogen war. Dies war insofern überraschend als zu erwarten war, daß die Lackpartikel infolge ihrer Kerbwirkung die Zähigkeit stark herabsetzen. Tatsächlich wird dieser Effekt dann beobachtet, wenn als Stoßfängerträger glasfaserfreie Thermoplasten eingesetzt werden, überraschenderweise jedoch nicht, wenn man glasfaserverstärktes Polypropylen einsetzt.

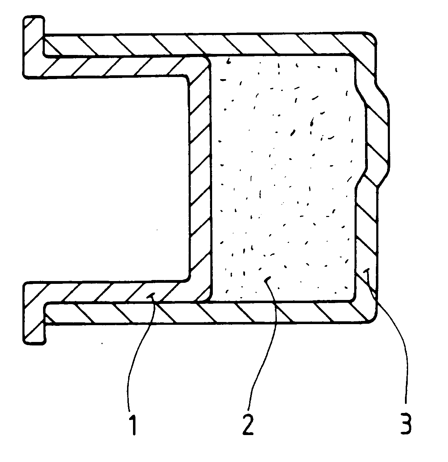

In der Abbildung ist das erfindungsgemäße Stoßfängersystem schematisch dargestellt. Mit 1 ist der Träger bezeichnet, mit 2 der Schaumkern und mit 3 die Hülle.

Zu den einzelnen Komponenten des Systems ist folgendes zu sagen:
A. Der Stoßfängerträger macht 70 - 30 Gew.-% des Systems aus. Er besteht aus eines glasfaserverstärkten Propylenpolymerisat mit zumindest teilweise unidirektional orientierten Endlosfasern, wobei der Glasfasergehalt mindestens 30 Gew.-%, vorzugsweise 40 - 70 Gew.-%, bezogen auf A, beträgt. Als Propylenpolymerisat ist das Homopolymere bevorzugt. Es kann aber auch bis zu 10 Gew.-% Comonomere, z. B. Ethylen einpolymerisiert enthalten oder bis zu 20 Gew.-% Ethylen/Propylen-Kautschuk zugemischt enthalten. Bevorzugt ist isotaktisches Polypropylen mit einem Molekulargewicht M_{w} von 100 000 bis 300 000 und enger Molekulargewichtsverteilung. Zur Verbesserung der Haftung an den Glasfasern können dem Polypropylen 1 - 20 Gew.-% eines mit Carboxylgruppen gepfropften Polypropylens oder EPDM-Kautschuks oder eines reaktiven Silans, z. B. Vinyl-, Methacryl- oder Aminosilans in Kombination mit einem organischen Peroxid zugesetzt werden. Die Glasfaserkomponente enthält sowohl unidirektional orientierte Endlosfasern als auch Wirrfasermatten, die in abwechselnden Schichten angeordnet und miteinander vernadelt sind. Das Gewichtsverhältnis von Endlosfasern zu Wirrfasern beträgt vorzugsweise 80 : 20 bis 40 : 60. Ein entsprechendes bevorzugtes Halbzeug ist in der EP-A 323 571 beschrieben. Der Stoßfängerträger wird durch Heißpressen aus dem plattenförmigen Halbzeug hergestellt. Die Dicke des Trägers liegt im allgemeinen zwischen 3 und 25 mm.
B. Der Schaumkern macht 2 - 15 % des Gewichts des Stoßfängersystems aus. Er besteht aus einem schaumförmigen Propylenpolymerisat mit einem Raumgewicht von 30 bis 150 g/l, vorzugsweise von 50 bis 120 g/l. Das Propylenpolymerisat kann ein Homopolymeres sein, bevorzugt sind Random-Copolymere mit 2 - 10 Gew.-% Ethylen oder Buten oder einer Mischung aus beiden. Der Schaumkern wird hergestellt durch Verpressen und Verschweißen von Schaumpartikeln in einer Form.
C. Die Stoßfängerhülle macht 28 - 73 % des Gemischs des Systems aus. Sie besteht aus einem Propylenpolymerisat, welches mit 25 bis 65 Gew.-%, bezogen auf C, eines Ethylen/Propylen-Kautschuks schlagzäh modifiziert ist. Als Propylenpolymerisat ist wieder das Homopolymere bevorzugt. Es hat sich gezeigt, daß ein relativ hoher Gehalt an Kautschuk unerläßlich ist, damit im Beanspruchungsfall die Stoßfängerhülle keinen sichtbaren Weißbruch erleidet. Bevorzugt ist ein Mindestgehalt an EP-Kautschuk von 35 Gew.-%, insbesondere von 40 Gew.-%. Bei einer bevorzugten Herstellweise wird zunächst aus der Gasphase Propylen homopolymerisiert, dann wird ein Gemisch von Ethylen und Propylen, sowie ggf. einem Dien zugefügt und dieses in Gegenwart des vorgebildeten Polypropylens polymerisiert (sogenannte "reactor blends"). Ein derartiges Verfahren ist in der DE-A-38 27 565 beschrieben. Das kautschukhaltige Propylenpolymerisat kann zur Verbesserung der Lackhaftung bzw. zur Modifizierung der Eigenschaften wie Steifigkeit, Wärmeformbeständigkeit, Schwindung etc. bis zu 30 Gew.-% Füllstoffe enthalten, z.B. Talkum, Kreide, Kaolin, kurze Glasfasern. Gegebenenfalls können auch hier wie bei A zur Verbesserung der Haftung zwischen Füllstoff und Propylenpolymerisat bzw. zur Erhöhung der Zähigkeit geeignete Haftvermittler zugesetzt werden. Die Dicke der weichen, flexiblen Stoßfängerhülle beträgt vorzugsweise 1,5 bis 6 mm.
D. Sofern der Stoßfänger lackiert ist, macht das Gewicht des Lacks 0,05 bis 4, vorzugsweise 0,1 - 2 % aus. ES kommen grundsätzlich alle üblichen Autolacke in Frage, vorzugsweise flexible Acrylat- oder Polyurethanlacke, welche die üblichen Pigmente enthalten können.

Die Bestandteile A, B und C können durch übliche Befestigungstechniken, z. B. durch Verschweißen bei Temperaturen oberhalb des Erweichungspunktes von Polypropylen oder durch Verschrauben oder Klipsen miteinander verbunden werden. Der Lack wird nach üblichen Verfahren auf die Stoßfängerhülle aufgetragen. Das Stoßfängersystem genügt höchsten Anforderungen an die Belastbarkeit; es hält z. B. einem Aufprall mit einer Geschwindigkeit von bis zu, 8 km/h ohne Schädigung stand.

Bei richtiger Wahl der Materialien für die Einzelkomponenten unter Beachtung der oben beschriebenen Kriterien wird ein wiederaufarbeitbares System erhalten. Bei der Wiederaufarbeitung wird zunächst der Stoßfänger mechanisch zerkleinert, z. B. erst grob durch Schneid- oder Prallmühlen, dann fein durch Hammer- oder Rotormühlen. Das zerkleinerte Gut mit einer Teilchengröße von etwa 5 - 10 mm wird in einem handelsüblichen, gut scherenden Extruder aufgeschmolzen und homogenisiert, und anschließend granuliert. Aus dem Granulat können Formkörper gespritzt werden, die folgende Eigenschaften aufweisen müssen:

| | |
|---|---|
| Glasfasergehalt | mindestens 10 Gew.-% |
| Zug-E-Modul (DIN 53 455) | mindestens 2000 N/mm² |
| Streckspannung (DIN 53 455) | mindestens 20 N/mm² |
| Schlagzähigkeit bei - 40°C (DIN 53 453) | mindestens 10 kJ/m² |
| Kerbschlagzähigkeit bei RT (DIN 53 453) | mindestens 5 kJ/m² |
| Wärmeformbeständigkeit (ISO 75 B) | mindestens 125°C , |

und - falls AutoPack anwesend ist - die mittlere Teilchengröße der Lackpartikel, d₅₀ < 500 µm beträgt.
Vorzugsweise sind die Lackpartikel kleiner als 300 µm.

Ein Werkstoff mit diesen Eigenschaften kann in vielfältiger Weise wieder eingesetzt werden, z. B. im Zwei-Komponenten-Spritzguß zur Aussteifung von Formteilen, für Motorraumkapselungen, für die Herstellung folien- oder teppichkaschierter Türseitenverkleidungen oder Kofferraumauskleidungen, für die Herstellung von Kabelkanälen, Luftzuführungen sowie von Gehäusen von Scheinwerfern oder Rückleuchten.

### Beispiel 1

A. Ein flächiges Halbzeug aus glasmattenverstärktem Polypropylen, das aufgebaut ist aus
55 Gew.-% hochisotaktischem (> 97 % isotakt. Anteile) Polypropylen mit enger Molmassenverteilung (sog. controlled rheology-Produkt) und MFI (230°/2, 16 kg) = 70 g/10 min
20 Gew.-% Glasmatten mit regelloser Anordnung der Glasfasern
25 Gew.-% gerichteten langen Glasfasern,
wobei die einzelnen Glasfaserlagen miteinander vernadelt sind, wird mit IR-Strahlern auf ca. 250°C aufgeheizt und in einem Stoßfängerträgerwerkzeug durch Heißpressen verformt, so daß die gerichteten Glasfasern horizontal in dem Träger angeordnet sind und so die Biegestefigkeit und -festigkeit des Trägers stark erhöhen.
B. Für die Herstellung eines geformten Polypropylenschaumkerns wird ein Polypropylen-Random-Copolymeres, das 2,2 Gew.-% Ethylen statistisch eingebaut enthält, einen MFI (230/2,16) von 8 g/10 min aufweist und in Form kleiner Granulatkörner mit 1,5 mm Durchmesser vorliegt, mit einem aliphatischen Kohlenwasserstoff auf ein Raumgewicht von 30 g/l aufgeschäumt. Die geschäumten Perlen werden dann in die Form gegeben, verdichtet und mit Wasserdampf verschweißt, so daß sich ein geformter Schaumkern mit einem Raumgewicht von 80 g/l ergibt.
C. Zur Herstellung einer Stoßfängerhülle aus EP-Kautschukmodifiziertem Polypropylen wird folgendermaßen verfahren:
In einer aus zwei gerührten Reaktoren bestehenden Kaskade wird in der Gasphase ein mit EP-Kautschuk modifiziertes Polypropylen mit folgenden Kennwerten hergestellt:
Ethylengehalt 28 %
Gehalt an Ethylen/Propylen-Kautschuk 49 Gew.-%
MFI (230/2,16) = 10 g/10 min
Enge Molmassenverteilung (CR-Produkt)

Das Produkt wird im Austragsextruder weiter modifiziert durch Zusatz von 0,5 Gew.-%, bezogen auf Polymer, einer Mischung aus
- 3 Gew.-Teilen: UCC-Silan® Ucarsil PC 2A und
- 1 Gew.-Teil: UCC-Silan® Ucarsil PC 1B

Das erhaltene Produkt hat folgende Eigenschaften

| | | |
|---|---|---|
| Streckspannung | 12 N/mm² | (DIN 53 455) |
| Zug-E-Modul | 450 N/mm² | (DIN 53 457) |
| Schlagzähigkelt bei - 40°C | ohne Bruch | (DIN 53 453) |
| Izod-Kerbschlagzähigkeit bei - 40°C | 40 kJ/m² | (ISO 180/4A) |

Mit diesem Produkt wird auf einer Großspritzgußmaschine mit einer Schließkraft von 1500 t in einem Stoßfänger hüllenwerkzeug eine Stoßfängerhülle hergestellt (Massetemp. 250°C, Formtemperatur 30°C, Zykluszeit 3,5 min).
D. Die Stoßfängerhülle wird folgendermaßen lackiert:
Vorbehandlung durch Beflammen
Auftrag einer 25 µm dicken Haftgrundierung auf Basis eines chlorierten Polyolefins (GCO1-7109 der BASF Lacke + Farben) 15 Minuten trocknen bei 80°C
Auftrag einer 40 µm dicken Decklackierung auf Basis Polyurethan:
Metallic-Basislack FW 95 der BASF Lacke + Farben
Klarlack 2K-PUR-GK 01-0102 der BASF Lacke + Farben

Das aus den vier beschriebenen Komponenten aufgebaute Stoßfängersystem enthält in Gewichtsteilen
46 Gew.-% Träger
8 Gew.-% Schaumkern
45 Gew.-% Hülle
1 Gew.-% Lack

Das komplette Stoßfängersystem wird in einer Schlagmühle zerkleinert zu ca. 5 - 10 mm großen Stücken. Zur Vermeidung elektrostatischer Aufladung speziell der Schaumteilchen wird etwas Wasser in die Mühle eingedüst (ca. 1 % bezogen auf Gesamtgewicht).

In einem angeschlossenen Windsichter werden die wesentlich leichteren Schaumpartikel abgetrennt, um später eine gleichmäßige Dosierung in den Konfektionierextruder zu ermöglichen.

In einem konventionellen Zweiwellenextruder (ZSK 53 von Werner + Pfleiderer), ausgerüstet mit 1 atmosphärischen und 1 Vakuumentgasung wird die Mischung aus kleingehäckseltem Träger und kleingehäckselter Hülle einerseits und der kleingehäckselte Schaumkern andererseits im Mischungsverhältnis wie im Stoßfängersystem vorliegend (92 : 8) eindosiert, aufgeschmolzen, innig verknetet und homogenisiert und in Form von Kunststoffsträngen ausgetragen. Der Durchsatz beträgt 80 kg/h.

Aus dem erhaltenen Granulat werden Probekörper gespritzt und folgende Eigenschaften gemessen:

| | |
|---|---|
| MFI (230/2,16) | 15 g/10 min |
| Glasfasergehalt | 20,6 Gew.-% |
| Zug-E-Modul | 3100 N/mm² |
| Streckspannung | 30 N/mm² |
| Schlagzähigkeit bei - 40°C | 13,5 kJ/m² |
| Kerbschlagzähigkeit (U-Kerbe) bei RT | 9,2 kJ/m² |
| Wärmeformbeständigkeit | 145°C |
| d₅₀ der Lackpartikel: | < 250 µm |

### Beispiel 2

Es wird wie in Beispiel 1 verfahren, mit dem einzigen Unterschied, daß die Stoßfängerhülle nicht lackiert wird.

Am Recyclat werden folgende Werte gemessen:

| | |
|---|---|
| MFI | 17 g/10 min |
| GF-Gehalt | 20,4 Gew.-% |
| Streckspannung | 35 N/mm² |
| Zug-E-Modul | 3000 N/mm² |
| Schlagzähigkeit bei - 40°C | 15 kJ/m² |
| Kerbschlagzähigkeit bei RT (U-Kerbe) | 10,5 kJ/m² |
| Wärmeformbeständigkeit | 145°C |

### Beispiel 3

Es wird wie im Beispiel 1 verfahren, mit folgenden Unterschieden:

Die Gewichtsanteile des Stoßfängersystems betragen
32 Gew.-% Träger
10 Gew.-% Schaumkern
57 Gew.-% Hülle
1 Gew.-% Lack

Das erhaltene Recyclat hat folgende Eigenschaften:

| | |
|---|---|
| MFI | 8,5 g/10 min |
| GF-Gehalt | 14,2 Gew.-% |
| Zug-E-Modul | 2100 N/mm² |
| Streckspannung | 21 N/mm² |
| Schlagzähigkeit bei -40°C | 11,5 kJ/m² |
| Kerbschlagzähigkeit bei RT (U-Kerbe) | 9,0 kJ/m² |
| Wärmeformbeständigkeit | 130°C |
| d₅₀ der Lackpartikel | < 250 µm |

### Beispiel 4

Es wird wie in Beispiel 1 verfahren - mit folgenden Unterschieden: Das komplette Stoßfängersystem wird nach Zerkleinern in ca. 10 mm große Stücke einer Windsichtung mittels Zyklon unterworfen. Hierbei können die Komponenten A, B und C aufgrund ihres starken Dichteunterschiedes (Dichte von A ca. 1,2, Dichte von B ca. 0,08, Dichte von C ca. 0,9 g/cm³) mit > 90 %iger Reinheit getrennt werden. Der beim Zerkleinern zusätzlich anfallende Feinanteil < 1,5 mm (ca. 1 - 3 % auf Gesamt), der vorwiegend aus Glasfasern besteht, wird im Filter des Zyklons aufgefangen.

In den Einzug des Extruders (baugleich wie in Beispiel 1) werden die Komponenten B und C jeweils getrennt über Dosiereinrichtungen (Differentialdosierwaage) eingegeben und aufgeschmolzen.

Komponente A sowie der Feinstaub werden über eine handelsübliche Dosier- und Stopfeinrichtung bei ca. 30 % des Extruderverfahrensteils in die Schmelze aus B + C eingetragen, wobei der Polymeranteil aufschmilzt. Im weiteren Durchgang durch den Extruder werden alle Komponenten innig vermischt.

Am Recyclat werden folgende Werte gemessen:

| | |
|---|---|
| MFI (230/2,16) | 14 g/10 min |
| Glasfasergehalt | 21,2 Gew.-% |
| Zug-E-Modul | 3900 N/mm² |
| Streckspannung | 49 N/mm² |
| Schlagzähigkeit bei - 40°C | 21 kJ/m² |
| Kerbschlagzähigkeit (U-Kerbe) bei RT | 12,2 kJ/m² |
| Wärmeformbeständigkeit HDT ISO 75 | 148°C |
| d 50 der Lackpartikel | < 250µm |

## Patentansprüche

1. Wiederaufarbeitbares Stoßfängersystem auf Polypropylenbasis, bestehend aus einem Stoßfängerträger A, einem energieabsorbierenden Schaumkern B und einer zähen, verformbaren Stoßfängerhülle C, die gegebenenfalls mit einem Lack D beschichtet sein kann, dadurch gekennzeichnet, daß es aufgebaut ist aus
A. 70 - 30 Gew.-% glasfaserverstärktem Propylenpolymerisat mit einem Glasfasergehalt von mindestens 30 Gew.-%, bezogen auf A, wobei die Glasfaser-Komponente sowohl unidirektional orientierte Endlosfasern als auch Wirrfasermatten enthält, die in abwechselnden Schichten angeordnet und miteinander vernadelt sind,
B. 2 - 15 Gew.-% schaumförmiges Propylenpolymerisat mit einem Raumgewicht von 30 bis 150 g/l aus verpressten und verschweißten Schaumpartikeln,
C. 28 - 73 Gew.-% eines Propylenpolymerisats, welches 25 bis 65 Gew.-%, bezogen auf C, eines Ethylen/Propylen-Kautschuks enthält, sowie gegebenenfalls
D. 0,05 - 4 Gew.-% eines üblichen Autolacks,
und daß daraus nach Zerkleinerung, Extrusion und Granulierung im Spritzgußverfahren hergestellte Probekörper folgende Eigenschaften aufweisen:
| | |
|---|---|
| Glasfasergehalt | mindestens 10 Gew.-% |
| Zug-E-Modul (DIN 53 455) | mindestens 2000 N/mm² |
| Streckspannung (DIN 53 455 | mindestens 20 N/mm² |
| Schlagzähigkeit bei -40°C (DIN 53 453) | mindestens 10 kJ/m² |
| Kerbschlagzähigkeit bei RT (DIN 53 453) | mindestens 5 kJ/m² |
| Wärmeformbeständigkeit (ISO 75 B) | mindestens 125°C , |
wobei im Fall der Anwesenheit das Autolacks D die mittlere Teilchengröße d₅₀ der Lackpartikel im Probekörper nach der Wiederaufarbeitung < 500 µm beträgt.

2. Wiederaufarbeitbares Stoßfängersystem auf Polypropylenbasis, bestehend aus einem Stoßfängerträger A, einem energieabsorbierenden Schaumkern B und einer zähen, verformbaren Stoßfängerhülle C, die mit einem Lack D beschichtet ist, dadurch gekennzeichnet, daß es aufgebaut ist aus
A. 70 - 30 Gew.-% glasfaserverstärktem Propylenpolymerisat mit einem Glasfasergehalt von mindestens 30 Gew.-%, bezogen auf A, wobei die Glasfaser-Komponente sowohl unidirektional orientierte Endlosfasern als auch Wirrfasermatten enthält, die in abwechselnden Schichten angeordnet und miteinander vernadelt sind,
B. 2 - 15 Gew.-% schaumförmiges Propylenpolymerisat mit einem Raumgewicht von 30 bis 150 g/l aus verpressten und verschweißten Schaumpartikeln,
C. 28 - 73 Gew.-% eines Propylenpolymerisats, welches 25 bis 65 Gew.-%, bezogen auf C, eines Ethylen/Propylen-Kautschuks enthält, sowie
D. 0,05 - 4 Gew.-% eines üblichen Autolacks,
und daß daraus nach Zerkleinerung, Extrusion und Granulierung im Spritzgußverfahren hergestellte Probekörper folgende Eigenschaften aufweisen:
| | |
|---|---|
| Glasfasergehalt | mindestens 10 Gew.-% |
| Zug-E-Modul (DIN 53 455) | mindestens 2000 N/mm² |
| Streckspannung (DIN 53 455 | mindestens 20 N/mm² |
| Schlagzähigkeit bei -40°C (DIN 53 453) | mindestens 10 kJ/m² |
| Kerbschlagzähigkeit bei RT (DIN 53 453) | mindestens 5 kJ/m² |
| Wärmeformbeständigkeit (ISO 75 B) | mindestens 125°C |
| mittlere Teilchengröße der Lackpartikel d₅₀ | < 500 µm |

3. Wiederaufarbeitbares Stoßfängersystem nach Anspruch 1 oder 2, dadurch gekennzeichnet, daß die Komponente C ein Ethylen/Propylen-Kautschuk ist, der hergestellt wurde durch Polymerisation von Ethylen und Propylen in Gegenwart von vorgebildeten Polypropylenen.

## Claims

1. A recyclable bumper system based on polypropylene, comprising a bumper support A, an energy-absorbing foam core B and a tough, deformable bumper shell C which is optionally coated with a coating D, characterized in that it has been formed from
A. 70 - 30% by weight of a glass fiber reinforced propylene polymer having a glass fiber content of not less than 30% by weight, based on A, the glass fiber component comprising not only unidirectionally oriented continuous filament fibers but also random-laid fiber mats, which were arranged in alternating layers and needled together,
B. 2 - 15% by weight of a propylene polymer foam having a density of from 30 to 150 g/l and being composed of pressed and welded foam particles,
C. 28 - 73% by weight of a propylene polymer comprising from 25 to 65% by weight, based on C, of an ethylene/propylene rubber, and optionally
D. 0.05 - 4% by weight of a conventional automotive coating,
and in that test specimens prepared therefrom by injection molding following comminution, extrusion and granulation have the following properties:
| | |
|---|---|
| Glass fiber content | not less than 10% by weight |
| Tensile modulus of elasticity (DIN 53 455) | not less than 2000 N/mm² |
| Yield stress (DIN 53 455) | not less than 20 N/mm² |
| Impact toughness at -40°C (DIN 53 453) | not less than 10 kJ/m² |
| Notched impact strength at RT (DIN 53 453) | not less than 5 kJ/m² |
| Temperature of deflection under load (ISO 75B) | not less than 125°C |
and, if the automotive coating D is present, the post-recycling median particle size d₅₀ of the paint particles in the test specimen is < 500 µm.

2. A recyclable bumper system based on polypropylene, comprising a bumper support A, an energy-absorbing foam core B and a tough, deformable bumper shell C which is coated with a coating D, characterized in that it has been formed from
A. 70 - 30% by weight of a glass fiber reinforced propylene polymer having a glass fiber content of not less than 30% by weight, based on A, the glass fiber component comprising not only unidirectionally oriented continuous filament fibers but also random-laid fiber mats, which were arranged in alternating layers and needled together,
B. 2 - 15% by weight of a propylene polymer foam having a density of from 30 to 150 g/l and being composed of pressed and welded foam particles,
C. 28 - 73% by weight of a propylene polymer comprising from 25 to 65% by weight, based on C, of an ethylene/propylene rubber, and
D. 0.05 - 4% by weight of a conventional automotive coating,
and in that test specimens prepared therefrom by injection molding following comminution, extrusion and granulation have the following properties:
| | |
|---|---|
| Glass fiber content | not less than 10% by weight |
| Tensile modulus of elasticity (DIN 53 455) | not less than 2000 N/mm² |
| Yield stress (DIN 53 455) | not less than 20 N/mm² |
| Impact toughness at -40°C (DIN 53 453) | not less than 10 kJ/m² |
| Notched impact strength at RT (DIN 53 453) | not less than 5 kJ/m² |
| Temperature of deflection under load (ISO 75B) | not less than 125°C |
| Median paint particle size, d₅₀ | <500 µm |

3. A recyclable bumper system as claimed in claim 1 or 2, characterized in that component C is an ethylene/propylene rubber prepared by polymerization of ethylene and propylene in the presence of preformed polypropylenes.

## Revendications

1. Système de pare-chocs recyclable ou réouvrable à base de polypropylène, qui se compose d'un support de pare-chocs A, d'un noyau de mousse absorbant l'énergie B, et d'une gaine ou enveloppe de pare-chocs tenace, déformable C, qui peut éventuellement être revêtue d'une peinture ou laque D,
caractérisé en ce qu'il se compose de
A. 70 à 30% d'un polymère du propylène renforcé de fibres de verre avec une teneur en fibres de verre atteignant au moins 30% en poids, par rapport à A, où le composant à base de fibres de verre contient aussi bien des fibres ans fin orientées unidirectionnellement qu'également des mais de fibres emmêlées ou embrouillées, qui sont agencés en coudes alternantes et sont mutuellement aiguilletés,
B. 2 à 15% en poids d'un polymère du propylène sous forme de mousse ou expansée, d'une masse spécifique de 30 à 150 g/l, en particules de mousse comprimées et soudées par fusion,
C. 28 à 73% en poids d'un polymère du propylène, qui contient 25 à 65% en poids, par rapport à C, d'un caoutchouc d'éthylène/propylène, comme éventuellement aussi
D. 0,05 à 4% en poids d'une laque ou peinture pour véhicules automobiles,
et en ce que les éprouvettes d'essai qui en sont préparées présentent, après broyage, extrusion et granulation, les propriétés suivantes :
| | |
|---|---|
| Teneur en fibres de verre | au moins 10% en poids |
| Module de traction E (DIN 53 455) | au moins 2000 N/mm² |
| Effort de tension (DIN 53 455) | au moins 20 N/mm² |
| Résistance au choc à -40°C (DIN 53 455) | au moins 10 kJ/m² |
| Résistance au choc sur barreau entaillé à la température ambiante (DIN 53 453) | au moins 5 kJ/m² |
| Stabilité de forme à chaud (ISO 75 B) | au moins 125°C |
où, dans le cas de la présence de la laque ou peinture pour véhicules automobiles D, le calibre moyen des particules d₅₀ des particules de laque ou peinture dans l'éprouvette d'essai après le retraitement est inférieur à 500 µm.

2. Système de pare-chocs recyclable ou réouvrable à base de polypropylène, qui se compose d'un support de pare-chocs A, d'un noyau de mousse absorbant l'énergie B, et d'une gaine ou enveloppe de pare-chocs tenace, déformable C, qui peut éventuellement être revêtue d'une peinture ou laque D,
caractérisé en ce qu'il se compose de
A. 70 à 30% d'un polymère du propylène renforcé de fibres de verre avec une teneur en fibres de verre atteignant au moins 30% en poids, par rapport à A, où le composant à base de fibres de verre contient aussi bien des fibres sans fin orientées unidirectionnellement qu'également des mats de fibres emmêlées ou embrouillées, qui sont agencés en couches alternantes et sont mutuellement aiguilletés,
B. 2 à 15% en poids d'un polymère du propylène sous forme de mousse ou expansée, d'une masse spécifique de 30 à 150 g/l, en particules de mousse comprimées et soudées par fusion,
C. 28 à 73% en poids d'un polymère du propylène, qui contient 25 à 65% en poids, par rapport à C, d'un caoutchouc d'éthylène/propylène, comme éventuellement aussi
D. 0,05 à 4% en poids d'une laque ou peinture pour véhicules automobiles, et en ce que les éprouvettes d'essai qui en sont préparées présentent, après broyage, extrusion et granulation, les propriétés suivantes :
| | |
|---|---|
| Teneur en fibres de verre | au moins 10% en poids |
| Module de traction E (DIN 53 455) | au moins 2000 N/mm² |
| Effort de tension (DIN 53 455) | au moins 20 N/mm² |
| Résistance au choc à -40°C (DIN 53 455) | au moins 10 kJ/m² |
| Résistance au choc sur barreau entaillé à la température ambiante (DIN 53 453) | au moins 5 kJ/m² |
| Stabilité de forme à chaud (ISO 75 B) | au moins 125°C |
| Calibre moyen des particules de laque ou peinture d₅₀ | inférieur à 500 µm |

3. Système de pare-chocs suivant la revendication 1 ou 2, caractérisé en ce que le composant C est un caoutchouc d'éthylène/propylène qui a été obtenu par la polymérisation de l'éthylène et du propylène en présence de polypropylène préparé au préablable.
